# EUROPEAN PATENT SPECIFICATION

(11) **EP 1 739 555 B1**
(45) Date of publication and mention of the grant of the patent: **26.03.2008**
(21) Application number: 06116256.6
(22) Date of filing: 28.06.2006
(51) Int. Cl.: G06F 11/14

(54) **Information processing apparatus, and method of controlling operation of the same**
Informationsverarbeitungsvorrichtung und Verfahren zur Betriebssteuerung dafür
Appareil de traitement d'informations et procédé de contrôle d'opération de celui-ci

(30) Priority: 29.06.2005 JP 2005189982
(43) Date of publication of application: 03.01.2007
(73) Proprietor: KABUSHIKI KAISHA TOSHIBA, Tokyo 105-8001 (JP)
(72) Inventor: Sugano, Hiroshi Toshiba Corp., IP Division, Tokyo 105-8001 (JP)
(74) Representative: Henkel, Feiler & Hänzel

(56) References cited:
- WO-A-01/27768
- US-A- 5 212 784

## Description

### CROSS-REFERENCE TO RELATED APPLICATIONS

This application is based upon and claims the benefit of priority from Japanese Patent Application No. 2005-189982, filed on June 29, 2006.

### BACKGROUND

### 1. Field

One embodiment of the invention relates to an automation technique for, when an adequate device is connected, automatically executing various procedures such as backup of data in a personal computer.

### 2. Description of the Related Art

Recently, various types of personal computers such as a notebook type and a desktop type are in widespread use. A personal computer of this kind has extensibility for connecting a peripheral device as required. An install of the so-called Plug and Play function in which connection and disconnection of a peripheral device can be performed during an operation of a system is now indispensable.

In such an environment where connection and disconnection of a peripheral device can be easily performed, for example, a work of backing up data of an internal disk drive to an external disk drive can be readily conducted. Because of the readiness, an error on the external disk drive easily occurs. Then, various techniques for preventing such an error from occurring have been proposed (for example, see Japanese Patent Application Publication (KOKAI) No. 2004-164362).

US-A-5212784 discloses an automated concurrent data backup system and a corresponding method.

Furthermore, WO 01/27768 discloses another automatic backup system.

### SUMMARY

In the conventional techniques disclosed in Japanese Patent Application Publication (KOKAI) No. 2004-164362, when an operation of backup is executed (regardless of whether timer activation or manual activation), it is judged whether the disk drive of the backup destination is valid or not. By contrast, recently, a request that, when a valid disk drive is connected, automatic execution of backup is triggered by this connection is becoming stronger.

According to the present invention the above object is achieved by meaning of an information processing apparatus according to claim 1, a method of controlling the operation of an information processing apparatus according to claim 5, by computer program according to claim 9 and by a computer readable storage medium storing the corresponding computer program as defined in claim 10. The dependent claims are directed to different advantageous aspects of the present invention.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary diagram showing the system configuration of an information processing apparatus according to an embodiment of the invention;

Figs. 2A and 2B are exemplary diagrams showing an outline of the operation of a storage management utility program that operates on the information processing apparatus according to the embodiment;

Fig. 3 is an exemplary diagram showing the module configuration of the storage management utility program that operates on the information processing apparatus according to the embodiment;

Fig. 4 shows an example of a setting screen which is presented to the user by means of a JOB setting module by the storage management utility program which operates on the information processing apparatus of the embodiment;

Fig. 5 shows an example of a job definition table in a storage managing repository possessed by the storage management utility program which operates on the information processing apparatus according to the embodiment;

Fig. 6 shows an example of a detection device table in the storage managing repository possessed by the storage management utility program that operates on the information processing apparatus according to the embodiment;

Fig. 7 is an exemplary flowchart showing the operation procedure of the storage management utility program that operates on the information processing apparatus according to the embodiment;

Fig. 8 is an exemplary diagram showing a first application example of the storage management utility program which operates on the information processing apparatus according to the embodiment; and

Fig. 9 is an exemplary diagram showing a second application example of the storage management utility program that operates on the information processing apparatus according to the embodiment.

### DETAILED DESCRIPTION

Various embodiments according to the invention will be described hereinafter with reference to the accompanying drawings. In general, according to one embodiment of the invention, an information processing apparatus including: a managing section that manages a plurality of correspondences between each of a plurality of combinations of a plurality of recording devices and each of a plurality of data backup procedures; a detecting section that detects a connection of any of the recording devices; and an activating section that, when it is determined that one of the combinations is satisfied by the connected recording devices based on a result of the detecting section, activates one of the data backup procedures that is made correspondent to the one of the satisfied combination.

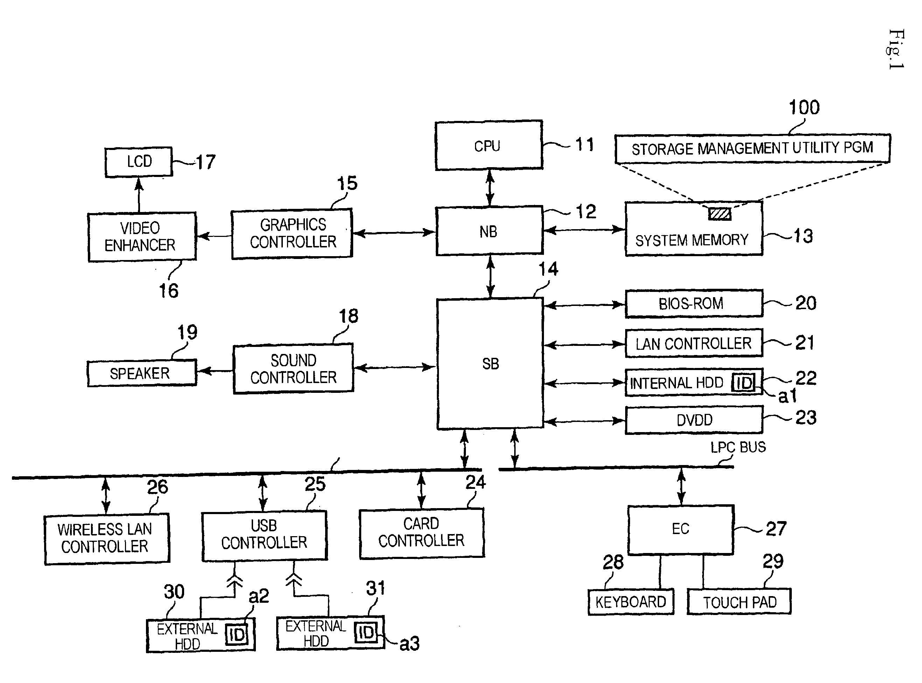

Fig. 1 is an exemplary diagram showing the system configuration of an information processing apparatus according to an embodiment of the invention. The information processing apparatus is realized, for example, as a notebook personal computer.

As shown in Fig. 1, the computer includes a CPU 11, a north bridge (NB) 12, a system memory 13, a south bridge (SB) 14, a graphics controller 15, a video enhancer 16, an LCD 17, a sound controller 18, a speaker 19, a BIOS-ROM 20, a LAN controller 21, a magnetic disk drive (HDD) 22, a DVD drive (DVDD) 23, a card controller 24, a USB (Universal Serial Bus) controller 25, a wireless LAN controller 26, an embedded controller (EC) 27, a keyboard 28, and a touch pad 29.

The CPU 11 is a processor which controls the operation of the computer, and executes an operating system and various programs such as a storage management utility program 100 which will be described later. The operating system and programs are loaded from the HDD 22 or the DVDD 23 to the system memory 13. The CPU 11 executes also a system BIOS (Basic Input/Output System) stored in the BIOS-ROM 20. The system BIOS is a program for controlling the hardware.

The NB 12 is a bridge device, which connects between a local bus of the CPU 11 and the SB 14. The NB 12 incorporates a memory controller, which controls the access to the system memory 13. The NB 12 has a function of communicating with the graphics controller 15 via an AGP (Accelerated Graphics Port) bus, a serial bus according to the PCI express standard, or the like.

The graphics controller 15 is a display controller, which controls the LCD 17 used as a display monitor of the computer. Video data, which are produced by the graphics controller 15 are sent to the video enhancer 16 to be subjected to a video process (image quality adjusting process) that enhances the image quality of the video data. The video data in which the image quality is enhanced by the video enhancer 16 are sent to the LCD 17.

The SB 14 controls devices on an LPC (Low Pin Count) bus and a PCI (Peripheral Component Interconnect) bus. The SB 14 incorporates an IDE (Integrated Drive Electronics) controller for controlling the HDD 22 and the DVDD 23. The SB 14 has a function of communicating with the sound controller 18.

The sound controller 18 is a sound source device, and outputs audio data that are to be reproduced.

The card controller 24 controls a card such as a PC card or an SD (Secure Digital) card. The USB controller 25 performs communications with external apparatuses via a serial bus according to the USB standard. In addition to the internal (built-in) HDD 22, external HDDs 30, 31 can be easily added to the computer as required. Each of the internal HDD 22 and the external HDDs 30, 31 has identification information (a1, a2, a3) which can uniquely identify the HDD by a combination of, for example, the device name, the manufacturer information, the type number, the serial number, and the like.

The wireless LAN controller 26 is a wireless communication device which performs wireless communication according to, for example, the IEEE 802.11 standard. The EC 27 is a one-chip microcomputer into which an embedded controller for managing the electric power, and a keyboard controller for controlling the keyboard 28 and the touch pad 29 are integrated. The EC 27 has a function of powering on/off the computer in accordance with a user's operation of a power button.

The storage management utility program 100 is a program for automatically executing backup of data and the like in the computer having the configuration described above. An outline of the operation of the program will be described.

It is assumed that the user of the computer intends to, among data of the internal HDD 22, back up system data to the external HDD 30, and back up user data to the external HDD 31. Namely, the user intends to dispersedly back up data of the single device, i.e., the HDD 22 to the HDDs 30, 31. Furthermore, it is assumed that JOB-1 is prepared as a procedure unit (program) for backing up the system data, and JOB-2 is prepared as a procedure unit for backing up the user data.

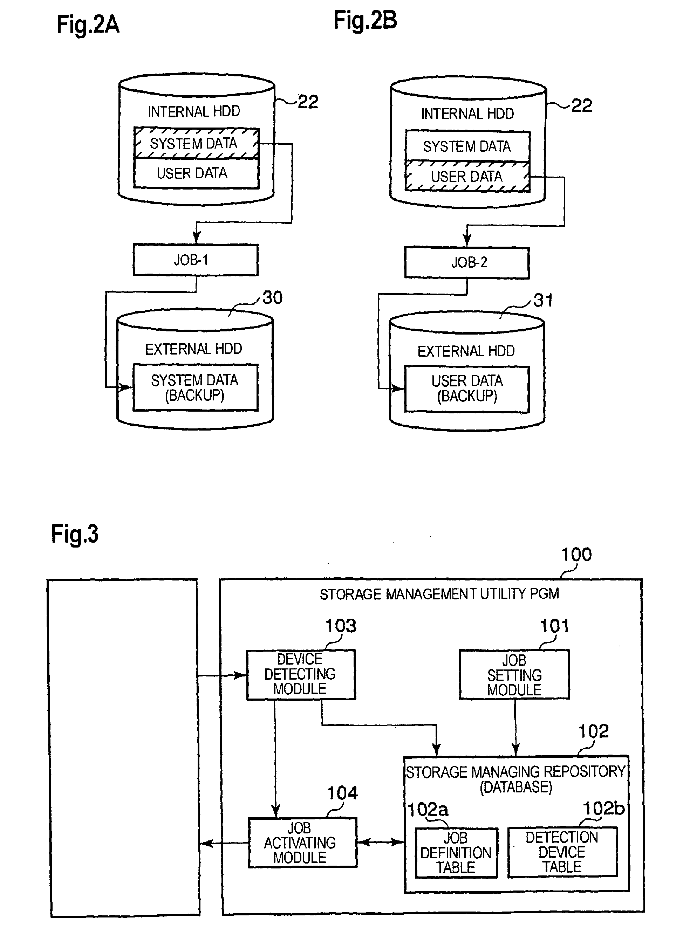

Under the above assumptions, when the external HDD 30 is connected via the USB controller 25 (Fig. 2A), the storage management utility program 100 automatically activates JOB-1 for backing up the system data in the internal HDD 22 to the connected HDD 30. When the external HDD 31 is connected via the USB controller 25 (Fig. 2B), the storage management utility program 100 automatically activates JOB-2 for backing up the user data in the internal HDD 22 to the connected HDD 31.

Namely, because of the function of the storage management utility program 100, when the system data are to be backed up, the user of the computer is requested simply to connect the HDD 30 for backing up the system data, to activate the procedure for backing up the system data to the HDD 30, and, when the user data are to be backed up, the user is requested simply to connect the HDD 31 for backing up the user data, to activate the procedure for backing up the user data to the HDD 31.

Fig. 3 is an exemplary diagram showing the module configuration of the storage management utility program 100. As shown in Fig. 3, the storage management utility program 100 has a JOB setting module 101, a storage managing repository (database) 102, a device detecting module 103, and a JOB activating module 104.

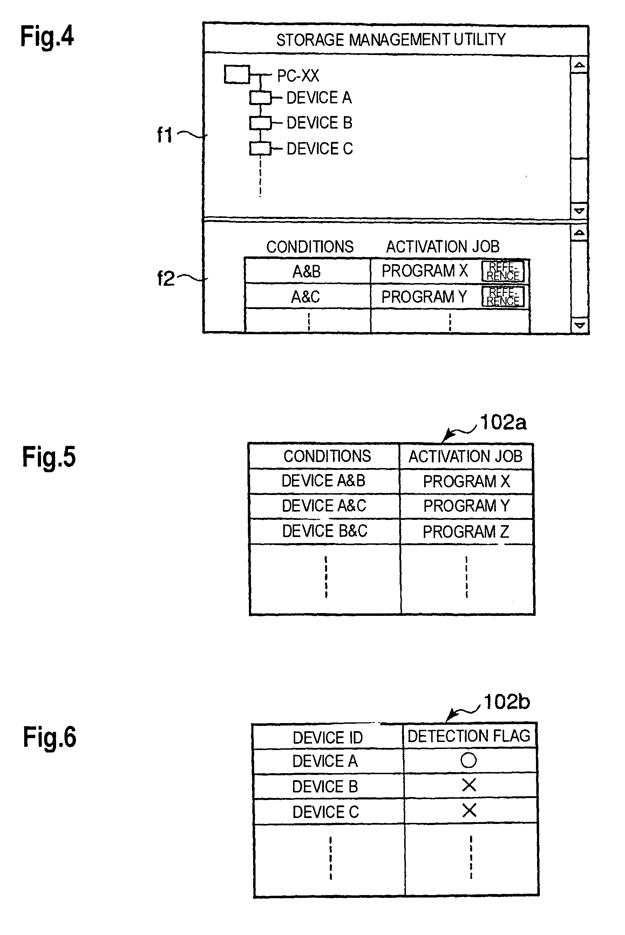

The JOB setting module 101 provides an interface for enabling the user to set correspondence between a combination of two or more devices, and a procedure to be executed when the combination is established. Fig. 4 shows an example of a setting screen which is presented to the user by the JOB setting module 101.

As shown in Fig. 4, the setting screen presented by the JOB setting module 101 is vertically divided into two fields f1, f2. A hardware configuration of the computer is displayed in a tree structure in the upper field f1, and a correspondence table showing a combination of two or more devices, and a procedure to be executed when the combination is established is displayed in the lower field f2.

A new combination and a correspondence procedure to be executed are set in the following manner. The user sets a condition column of a blank entry in the correspondence table displayed in the field f2 to a selected state, and then selects desired devices to be combine from the devices displayed in a tree structure in the field f1. The combination of the selected devices is stored in the condition column. Next, the procedure which is made correspondent to the combination is input into the activation JOB column. This input is performed by depressing "Reference" button disposed in the activation JOB column, and selecting a desired (program) file from a file list which is displayed in a tree structure.

When an existing combination and a procedure to be made correspondent are changed, the above-described setting work is again performed in the to-be-changed item of the objective entry in the correspondence table, i.e., in the condition column or the activation JOB column. An existing combination and a procedure to be made correspondent can be deleted, for example, by operating the keyboard.

The contents that are set on the setting screen presented by the JOB setting module 101 are managed by a JOB definition table 102a in the storage managing repository 102. The storage managing repository 102 is a database which is built on the system memory 13 and the HDD 22. Fig. 5 shows an example of the JOB definition table 102a.

In the example of Fig. 5, in the case where a device A is connected, when there is a device B, a program X is activated, and, when there is a device C, a program Y is activated. When both the devices B, C exist, both the programs X, Y are activated.

Similarly, in the case where the device B is connected, when there is the device A, the program X is activated, and, when there is the device C, a program Z is activated. When both the devices A, C exist, both the programs X, Z are activated.

In the storage managing repository 102, there is a detection device table 102b in addition to the JOB definition table 102a. Fig. 6 shows an example of the detection device table 102b. When any device is connected, the device detecting module 103 detects the connection as a result of a notification from the operating system, and records the detection result into the detection device table 102b. In the example of Fig. 6, it is shown that, at the present, the device A is connected, and the devices B, C are not connected.

When the device detecting module 103 detects that any device is connected, the JOB activating module 104 receives the notification of the connection from the device detecting module 103, refers the JOB definition table 102a and detection device table 102b in the storage managing repository 102, and checks whether a combination established by the detection exists or not. If there is an established combination, the module requests the operating system to activate a procedure that is made correspondent to the combination.

For example, it is assumed that the detection of the device B is notified from the device detecting module 103, and the contents of the JOB definition table 102a are as shown in Fig. 5. It is seen that the programs X, Z exist as candidates for a activation JOB. When assuming that the contents of the JOB definition table 102a are as shown in Fig. 6, it is seen that the device A is connected, but the device C not connected, and only the combination of the devices A, B which is the condition of activating the program X is established. Therefore, the JOB activating module 104 requests the operating system to activate only the program X.

In this way, because of the function of the storage management utility program 100, the adequate procedure corresponding to the connection of the device can be automatically activated simply by connecting an objective device.

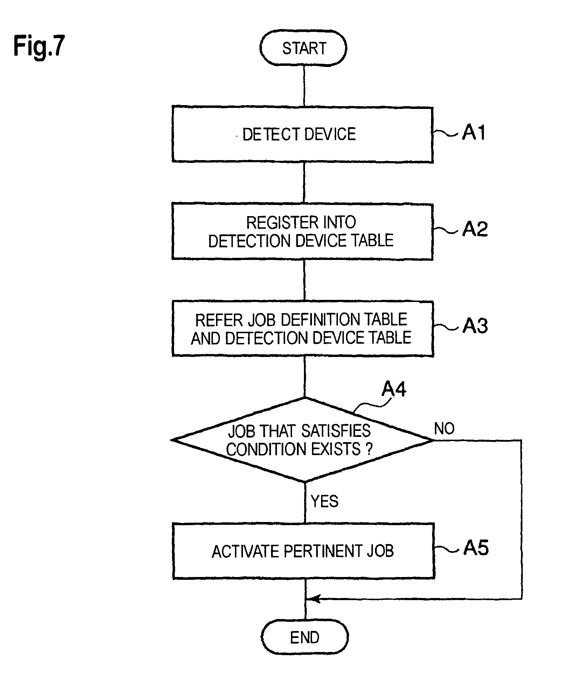

Fig. 7 is an exemplary flowchart showing the operation procedure of the storage management utility program 100.

When a new device is connected, the device is detected by the device detecting module 103 (block A1), and the device detecting module 103 registers the detection result into the detection device table 102b in the storage managing repository 102 (block A2). The device detecting module 103 notifies the JOB activating module 104 of the detection. The JOB activating module 104 which receives the notification from the device detecting module 103 refers the JOB definition table 102a and detection device table 102b in the storage managing repository 102 (block A3).

Then, the JOB activating module 104 checks whether a JOB in which the activating condition is satisfied as a result of the detection of the device exists or not (block A4). If exists (YES of block A4), the module requests the operating system to activate the JOB (block A5).

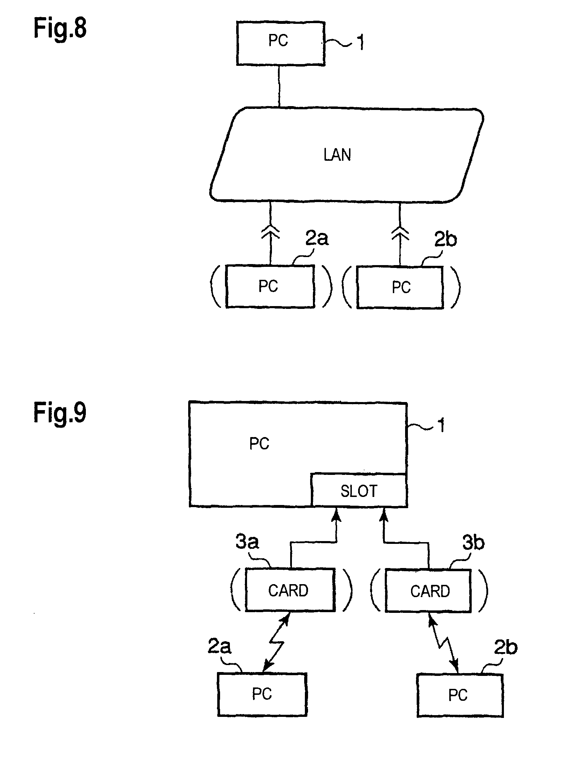

The example in which, when a storage device of the backup destination is connected via the USB controller 25, backup of data of a storage device is automatically executed is described above. The technique is not restricted to this connection form. When, as shown in Fig. 8, the computer 1 is connected to a LAN via a LAN controller 21 and computers 2a, 2b and the like which are communicatable via the LAN are connected to the LAN, for example, it is possible to set a configuration where an arbitrary JOB is automatically executed with using detection of a folder shared by the computers 2a, 2b and the like as a trigger. In this case, identification information that can be uniquely identified is produced by a combination of, for example, the name of a path or server on a network, the name of a folder, etc.

This technique is not restricted to automatic execution of backup of data. Any procedure can be set as a target of automatic execution. For example, it may be configured so that, when a wireless communication card 3a is housed in a slot for connecting with the card controller 24 as shown in Fig. 9, a wireless connection with the computer 2a is automatically executed, and, when a wireless communication card 3b is housed, a wireless connection with the computer 2b is automatically executed.

As described above, according to an aspect of the invention, there is provided, an information processing apparatus including: a managing section that manages a plurality of correspondences between each of a plurality of combinations of a plurality of recording devices and each of a plurality of data backup procedures; a detecting section that detects a connection of any of the recording devices; and an activating section that, when it is determined that one of the combinations is satisfied by the connected recording devices based on a result of the detecting section, activates one of the data backup procedures that is made correspondent to the one of the satisfied combination.

The information processing apparatus may further include a setting section that sets the correspondences to be managed by the managing section.

The information processing apparatus may further include a communication controlling section that controls data transmission and reception via a network. The detecting section may further detect a connection of any of the recording devices that is capable of performing data transmission to and reception from the communication controlling section by connecting to the network.

The managing section may manage a correspondence between a combination of an internal recording device included in the information processing apparatus and an external recording device, and a procedure of copying data of the internal recording device to the external recording device. When the external recording device is connected to the information processing apparatus, the activating section activates the procedure of copying to automatically back up data of the internal recording device to the external recording device.

According to another aspect of the invention, there is provided, a method of controlling an operation of an information processing apparatus including a managing section that manages a plurality of correspondences between each of a plurality of combinations of a plurality of recording devices and each of a plurality of data backup procedures, the method including: detecting a connection of any of the recording devices; and when it is determined that one of the combinations is satisfied by the connected recording devices based on a result of a detection, activating one of the data backup procedures that is made correspondent to the satisfied combination.

The method may further include setting the correspondences to be managed by the managing section.

The information processing apparatus may further include a communication controlling section that controls data transmission and reception via a network. In the detection, a connection of any of the recording devices that is capable of performing data transmission to and reception from the communication controlling section by connecting to the network may be further detected.

The managing section may manage a correspondence between a combination of an internal recording device included in the information processing apparatus and an external recording device, and a procedure of copying data of the internal recording device to the external recording device. The method may further include, when the external recording device is connected to the information processing apparatus, activating the procedure of copying to automatically back up data of the internal recording device to the external recording device.

According to still another aspect of the invention, there is provided a computer readable storage medium, the storage medium storing a program of instructions executable by the computer to perform functions, the functions including: managing a plurality of correspondences between each of a plurality of combinations of a plurality of recording devices and each of a plurality of data backup procedures; detecting a connection of any of the recording devices; and when it is determined that one of the combinations is satisfied by the connected recording devices based on a result of a detection, activating one of the data backup procedures that is made correspondent to the satisfied combination.

The functions may further include setting the correspondences to be managed in the function of managing.

The functions may further include controlling data transmission and reception via a network. In the detecting function, a connection of any of the recording devices that is capable of performing data transmission to and reception from by the controlling function by connecting to the network may be further detected.

The correspondences may include a correspondence between a combination of an internal recording device included in an image processing apparatus and an external recording device, and a procedure of copying data of the internal recording device to the external recording device. The function may further include, when the external recording device is connected to the information processing apparatus, activating the procedure of copying to automatically back up data of the internal recording device to the external recording device.

According to the embodiments described above, it may be possible to provide an information processing apparatus in which, when an adequate device is connected, various procedures such as backup of data can be automatically executed, and a method of controlling an operation of the apparatus.

## Claims

1. An information processing apparatus comprising:
a managing section (102) configured so as to manage a plurality of correspondences between each of a plurality of combinations of a plurality of recording devices and each of a plurality of data backup procedures;
a detecting section (103) configured so as to detect the combination of recording devices connected to the information processing apparatus; and
an activating section (104) configured so as to activate the corresponding data backup procedure corresponding to the combination of recording devices as defined by the plurality of correspondences, when it is determined that the combination of connected recording devices, as detected by the detection section (103), matches one of the combinations of recording devices of the plurality correspondences.

2. The information processing apparatus according to claim 1, further comprising a setting section (101) configured so as to set the correspondences to be managed by the managing section (102).

3. The information processing apparatus according to claim 1, further comprising a communication controlling section configured so as to control data transmission and reception via a network,
wherein the detecting section is configured so as to further detect a connection of any of the recording devices that is capable of performing data transmission to and reception from the communication controlling section by connecting to the network.

4. The information processing apparatus according to claim 1, wherein the managing section (102) is configured so as to manage a correspondence between a combination of an internal recording device included in the information processing apparatus and an external recording device, and a procedure of copying data of the internal recording device to the external recording device, and
wherein when the external recording device is connected to the information processing apparatus, the activating section configured so as to activate the procedure of copying to automatically back up data of the internal recording device to the external recording device.

5. A method of controlling an operation of an information processing apparatus including a managing section (102) that manages a plurality of correspondences between each of a plurality of combinations of a plurality of recording devices and each of a plurality of data backup procedures;
the method comprising the steps of:
detecting the combination of recording devices connected to the information processing apparatus; and
activating the corresponding data backup procedure corresponding to the combination of recording devices as defined by the plurality of correspondences, when it is determined that the combination of connected recording devices, as detected by the detection step, matches one of the combinations of recording devices of the plurality correspondences.

6. The method according to claim 5, further comprising setting the correspondences to be managed by the managing section (102).

7. The method according to claim 5, wherein the information processing apparatus further including a communication controlling section that controls data transmission and reception via a network, and
wherein, in the detection, a connection of any of the recording devices that is capable of performing data transmission to and reception from the communication controlling section by connecting to the network is further detected.

8. The method according to claim 5, wherein the managing section (102) manages a correspondence between a combination of an internal recording device included in the information processing apparatus and an external recording device, and a procedure of copying data of the internal recording device to the external recording device, and
wherein, when the external recording device is connected to the information processing apparatus, activating the procedure of copying to automatically back up data of the internal recording device to the external recording device.

9. A computer program comprising instructions executable by a computer such that when said instructions are executed by a computer, the following functions are performed:
managing a plurality of correspondences between each of a plurality of combinations of a plurality of recording devices and each of a plurality of data backup procedures;
detecting the combination of recording devices connected to the information processing apparatus; and
activating the corresponding data backup procedure corresponding to the combination of recording devices as defined by the plurality of correspondences, when it is determined that the combination of connected recording devices, as detected by the detection step, matches one of the combinations of recording devices of the plurality correspondences.

10. A computer readable storage medium, the storage medium storing a program according to claim 9.

11. The computer readable storage medium according to claim 10, the functions further comprising setting the correspondences to be managed in the function of managing.

12. The computer readable storage medium according to claim 10, the functions further comprising controlling data transmission and reception via a network,
wherein, in the detecting function, a connection of any of the recording devices that is capable of performing data transmission to and reception from by the controlling function by connecting to the network is further detected.

13. The computer readable storage medium according to claim 10, wherein the correspondences include a correspondence between a combination of an internal recording device included in an image processing apparatus and an external recording device, and a procedure of copying data of the internal recording device to the external recording device, and
wherein, when the external recording device is connected to the information processing apparatus, activating the procedure of copying to automatically back up data of the internal recording device to the external recording device.

## Patentansprüche

1. Informationsverarbeitungsvorrichtung, mit:
einem Verwaltungsabschnitt (100), der konfiguriert ist, um mehrere Übereinstimmungen zwischen einer von mehreren Kombinationen von mehreren Aufzeichnungseinrichtungen und mehreren Datensicherungsprozeduren zu verwalten;
einem Erfassungsabschnitt (103), der konfiguriert ist, um die Kombination von Aufzeichnungseinrichtungen zu erfassen, die mit der Informationsverarbeitungsvorrichtung verbunden sind; und
einem Aktivierungsabschnitt (104), der konfiguriert ist, um die entsprechende Datensicherungsprozedur entsprechend der Kombinationen von Aufzeichnungseinrichtungen, wie es durch die mehreren Übereinstimmungen festgelegt ist, zu aktivieren, wenn bestimmt wird, dass die Kombination von verbundenen Aufzeichnungseinrichtungen, wie sie durch den Erfassungsabschnitt (103) erfasst wurde, zu einer der Kombinationen von Aufzeichnungseinrichtungen der mehreren Übereinstimmung passt.

2. Informationsverarbeitungsvorrichtung gemäß Anspruch 1, ferner mit einem Einstellabschnitt (101), der konfiguriert ist, um die Übereinstimmung einzustellen, die durch den Verwaltungsabschnitt (102) zu verwalten sind.

3. Informationsverarbeitungsvorrichtung gemäß Anspruch 1, ferner mit einem Kommunikationssteuerabschnitt, der konfiguriert ist, um die Übertragung und den Empfang von Daten über ein Netzwerk zu steuern,
wobei der Erfassungsabschnitt konfiguriert ist, um ferner eine Verbindung einer der Aufzeichnungseinrichtungen zu erfassen, die in der Lage ist, eine Datenübertragung zu und einen Datenempfang von dem Kommunikationssteuerabschnitt durch Verbinden mit dem Netzwerk durchzuführen.

4. Informationsverarbeitungsvorrichtung gemäß Anspruch 1, bei dem der Verwaltungsabschnitt (102) konfiguriert ist, um eine Übereinstimmung zwischen einer Kombination einer internen Aufzeichnungseinrichtung, die in der Informationsverarbeitungsvorrichtung enthalten ist, und einer externen Aufzeichnungseinrichtung und eine Prozedur zum Kopieren von Daten der internen Aufzeichnungseinrichtung in die externe Aufzeichnungseinrichtung zu verwalten, und
wobei, wenn die externe Aufzeichnungseinrichtung mit der Informationsverarbeitungsvorrichtung verbunden ist, der Aktivierungsabschnitt konfiguriert ist, um die Prozedur zum Kopieren zu aktivieren, um Daten der internen Aufzeichnungseinrichtung automatisch in der externen Aufzeichnungseinrichtung zu sichern.

5. Verfahren zum Steuern eines Betriebs einer Informationsverarbeitungsvorrichtung, die einen Verwaltungsabschnitt (102) aufweist, der mehrere Übereinstimmungen zwischen einer von mehreren Kombinationen von mehreren Aufzeichnungseinrichtungen und von mehreren Datensicherungsprozeduren verwaltet;
wobei das Verfahren die folgenden Schritte umfasst:
Erfassen der Kombination von Aufzeichnungseinrichtungen, die mit der Informationsverarbeitungsvorrichtung verbunden sind; und
Aktivieren der entsprechenden Datensicherungsprozedur entsprechend der Kombination von Aufzeichnungseinrichtungen, wie sie durch die mehreren Übereinstimmungen festgelegt ist, wenn bestimmt wird, dass die Kombination von verbundenen Aufzeichnungseinrichtungen, wie durch den Erfassungsschritt erfasst, mit einer der Kombinationen von Aufzeichnungseinrichtungen der mehreren Übereinstimmungen übereinstimmt.

6. Verfahren gemäß Anspruch 5, ferner mit einem Einstellen der Übereinstimmungen, die durch den Verwaltungsabschnitt (102) zu verwalten sind.

7. Verfahren gemäß Anspruch 5, bei dem die Informationsverarbeitungsvorrichtung ferner einen Kommunikationssteuerabschnitt aufweist, der die Übertragung und den Empfang von Daten über ein Netzwerk steuert, und
wobei bei der Erfassung ferner eine Verbindung einer der Aufzeichnungseinrichtungen erfasst wird, die in der Lage ist, eine Datenübertragung zu und einen Datenempfang von dem Kommunikationssteuerabschnitt durch Verbinden mit dem Netzwerk durchzuführen.

8. Verfahren gemäß Anspruch 5, bei dem der Verwaltungsabschnitt (102) eine Übereinstimmung zwischen einer Kombination einer internen Aufzeichnungseinrichtung, die in der Informationsverarbeitungsvorrichtung enthalten ist, und einer externer Aufzeichnungseinrichtung und eine Prozedur zum Kopieren von Daten der internen Aufzeichnungseinrichtung in die externe Aufzeichnungseinrichtung verwaltet, und
wobei, wenn die externe Aufzeichnungseinrichtung mit der Informationsverarbeitungsvorrichtung verbunden ist, die Prozedur zum Kopieren aktiviert wird, um Daten der internen Aufzeichnungseinrichtung automatisch in der externen Aufzeichnungseinrichtung zu sichern.

9. Computerprogramm mit Anweisungen, die durch einen Computer ausführbar sind, sodass, wenn die Anweisungen durch einen Computer ausgeführt werden, die folgenden Funktionen durchgeführt werden:
Verwalten von mehreren Übereinstimmungen zwischen einer von mehreren Kombinationen von mehreren Aufzeichnungseinrichtungen und einer von mehreren Datensicherungsprozeduren;
Erfassen der Kombination von Aufzeichnungseinrichtungen, die mit der Informationsverarbeitungsvorrichtung verbunden sind; und
Aktivieren der entsprechenden Datensicherungsprozedur entsprechend der Kombination von Aufzeichnungseinrichtungen, wie sie durch die mehreren Übereinstimmungen festgelegt ist, wenn bestimmt wird, dass die Kombination von verbundenen Aufzeichnungseinrichtungen, wie sie durch den Erfassungsschritt erfasst wurde, mit einer der Kombinationen von Aufzeichnungseinrichtungen der mehreren Übereinstimmungen übereinstimmt.

10. Computerlesbares Speichermedium, wobei das Speichermedium ein Programm gemäß Anspruch 9 speichert.

11. Computerlesbares Speichermedium gemäß Anspruch 10, wobei die Funktionen ferner ein Einstellen der Übereinstimmungen umfassen, die bei der Verwaltungsfunktion zu verwalten sind.

12. Computerlesbares Speichermedium gemäß Anspruch 10, wobei die Funktionen ferner ein Steuern der Übertragung und des Empfangs von Daten über ein Netzwerk umfassen,
wobei bei der Erfassungsfunktion ferner eine Verbindung einer der Aufzeichnungseinrichtungen, die in der Lage ist, eine Datenübertragung und einen Datenempfang auszuführen, durch die Steuerfunktion durch Verbinden mit dem Netzwerk erfasst.

13. Computerlesbares Speichermedium gemäß Anspruch 10, bei dem die Übereinstimmungen eine Übereinstimmung zwischen einer Kombination einer internen Aufzeichnungseinrichtung, die in einer Bildverarbeitungsvorrichtung enthalten ist, und einer externen Aufzeichnungseinrichtung und eine Prozedur zum Kopieren von Daten der internen Aufzeichnungseinrichtung in die externe Aufzeichnungseinrichtung umfassen, und
wobei, wenn die externe Aufzeichnungseinrichtung mit der Informationsverarbeitungsvorrichtung verbunden ist, die Prozedur zum Kopieren aktiviert wird, um Daten der internen Aufzeichnungseinrichtung automatisch in der externen Aufzeichnungseinrichtung zu sichern.

## Revendications

1. Appareil pour le traitement d'informations, comprenant :
une section de gestion (102) configurée de façon à gérer une pluralité de correspondances entre chacune d'une pluralité de combinaisons d'une pluralité de dispositifs d'enregistrement et chacune d'une pluralité de procédures de sauvegarde de données ;
une section de détection (103) configurée de façon à détecter la combinaison de dispositifs d'enregistrement connectés à l'appareil pour le traitement d'informations ; et
une section d'activation (104) configurée de façon à activer la procédure de sauvegarde de données correspondante, correspondant à la combinaison de dispositifs d'enregistrement, comme défini par la pluralité de correspondances, quand il est déterminé que la combinaison de dispositifs d'enregistrement connectés, détectée par la section de détection (103), coïncide avec l'une des combinaisons de dispositifs d'enregistrement de la pluralité de correspondances.

2. Appareil pour le traitement d'informations selon la revendication 1, comprenant par ailleurs une section de paramétrage (101) configurée de façon à paramétrer les correspondances destinées à être gérées par la section de gestion (102).

3. Appareil pour le traitement d'informations selon la revendication 1, comprenant par ailleurs une section de contrôle de communication configurée de façon à contrôler une transmission et une réception de données au sein d'un réseau,
dans lequel la section de détection est configurée par ailleurs de façon à détecter une connexion de l'un quelconque des dispositifs d'enregistrement qui est apte à exécuter une transmission de données vers, et une réception de données depuis, la section de contrôle de communication, par une connexion au réseau.

4. Appareil pour le traitement d'informations selon la revendication 1, dans lequel la section de gestion (102) est configurée de façon à gérer une correspondance entre une combinaison d'un dispositif d'enregistrement interne incorporé dans l'appareil pour le traitement d'informations et d'un dispositif d'enregistrement externe, et une procédure de copie de données du dispositif d'enregistrement interne sur le dispositif d'enregistrement externe, et
dans lequel, quand le dispositif d'enregistrement externe est connecté à l'appareil pour le traitement d'informations, la section d'activation est configurée de façon à activer la procédure de copie dans le but de sauvegarder automatiquement des données du dispositif d'enregistrement interne sur le dispositif d'enregistrement externe.

5. Procédé pour le contrôle d'une opération d'un appareil pour le traitement d'informations comprenant une section de gestion (102) qui gère une pluralité de correspondances entre chacune d'une pluralité de combinaisons d'une pluralité de dispositifs d'enregistrement et chacune d'une pluralité de procédures de sauvegarde de données ;
le procédé comprenant les étapes consistant à :
détecter la combinaison de dispositifs d'enregistrement connectés à l'appareil pour le traitement d'informations ; et
activer la procédure de sauvegarde de données correspondante, correspondant à la combinaison de dispositifs d'enregistrement comme défini par la pluralité de correspondances, quand il est déterminé que la combinaison de dispositifs d'enregistrement connectés, détectée par l'étape de détection, coïncide avec l'une des combinaisons de dispositifs d'enregistrement de la pluralité de correspondances.

6. Procédé selon la revendication 5, comprenant par ailleurs l'étape consistant à paramétrer les correspondances destinées à être gérées par la section de gestion (102).

7. Procédé selon la revendication 5, dans lequel l'appareil pour le traitement d'informations comprend par ailleurs une section de contrôle de communication qui contrôle une transmission et une réception de données au sein d'un réseau, et
dans lequel, au cours de la détection, une connexion de l'un quelconque des dispositifs d'enregistrement qui est apte à exécuter une transmission de données vers, et une réception de données depuis, la section de contrôle de communication, par une connexion au réseau, est détectée par ailleurs.

8. Procédé selon la revendication 5, dans lequel la section de gestion (102) gère une correspondance entre une combinaison d'un dispositif d'enregistrement interne incorporé dans l'appareil pour le traitement d'informations et d'un dispositif d'enregistrement externe, et une procédure de copie de données du dispositif d'enregistrement interne sur le dispositif d'enregistrement externe, et
dans lequel, quand le dispositif d'enregistrement externe est connecté à l'appareil pour le traitement d'informations, une activation de la procédure de copie dans le but de sauvegarder automatiquement des données du dispositif d'enregistrement interne sur le dispositif d'enregistrement externe.

9. Programme d'ordinateur comprenant des instructions exécutables par un ordinateur de telle sorte que, quand lesdites instructions sont exécutées par un ordinateur, les fonctions suivantes sont exécutées :
gestion d'une pluralité de correspondances entre chacune d'une pluralité de combinaisons d'une pluralité de dispositifs d'enregistrement et chacune d'une pluralité de procédures de sauvegarde de données ;
détection de la combinaison de dispositifs d'enregistrement connectés à l'appareil pour le traitement d'informations ; et
activation de la procédure de sauvegarde de données correspondante, correspondant à la combinaison de dispositifs d'enregistrement, comme défini par la pluralité de correspondances, quand il est déterminé que la combinaison de dispositifs d'enregistrement connectés, détectée par la section de détection, coïncide avec l'une des combinaisons de dispositifs d'enregistrement de la pluralité de correspondances.

10. Support d'enregistrement lisible par un ordinateur, le support d'enregistrement contenant un programme selon la revendication 9.

11. Support d'enregistrement lisible par un ordinateur selon la revendication 10, les fonctions comprenant par ailleurs un paramétrage des correspondances destinées à être gérées par la fonction de gestion.

12. Support d'enregistrement lisible par un ordinateur selon la revendication 10, les fonctions comprenant par ailleurs un contrôle d'une transmission et d'une réception de données au sein d'un réseau,
dans lequel, dans la fonction de détection, une connexion de l'un quelconque des dispositifs d'enregistrement qui est apte à exécuter une transmission de données vers, et une réception de données depuis, par la fonction de contrôle, par une connexion au réseau, est détectée par ailleurs.

13. Support d'enregistrement lisible par un ordinateur selon la revendication 10, dans lequel les correspondances comprennent une correspondance entre une combinaison d'un dispositif d'enregistrement interne incorporé dans un appareil pour le traitement d'images et d'un dispositif d'enregistrement externe, et une procédure de copie de données du dispositif d'enregistrement interne sur le dispositif d'enregistrement externe, et
dans lequel, quand le dispositif d'enregistrement externe est connecté à l'appareil pour le traitement d'informations, une activation de la procédure de copie dans le but de sauvegarder automatiquement des données du dispositif d'enregistrement interne sur le dispositif d'enregistrement externe.
